Europäisches Patentamt

European Patent Office

Office européen des brevets

(19)

(11) **EP 0 540 330 B1**

(12) # EUROPEAN PATENT SPECIFICATION

(45) Date of publication and mention
of the grant of the patent:
**16.07.1997 Bulletin 1997/29**

(51) Int Cl.6: **H04B 1/66**

(21) Application number: **92309916.2**

(22) Date of filing: **29.10.1992**

(54) **Procedure for decoding an audio signal in which other information has been included in said audiosignal by making use of masking effect**

Verfahren zur Dekodierung eines Audiosignals in welchem eine andere Information unter Verwendung des Verdeckungseffektes eingefügt wurde

Procédé pour décoder un signal audio dans lequel un autre signal à été inséré en utilisant l'effet de masquage

(84) Designated Contracting States:
**DE ES FR GB IT NL SE**

(30) Priority: **30.10.1991 FI 915114**

(43) Date of publication of application:
**05.05.1993 Bulletin 1993/18**

(73) Proprietor: **NOKIA KULUTUSELEKTRONIIKKA OY**
**20321 Turku (FI)**

(72) Inventor: **Makivirta, Aki**
**SF-33720 Tampere (FI)**

(74) Representative: **Singleton, Jeffrey**
**Eric Potter Clarkson**
**St. Mary's Court**
**St. Mary's Gate**
**Nottingham NG1 1LE (GB)**

(56) References cited:
- **1990 INTERNATIONAL CONFERENCE ON ACOUSTICS, SPEECH AND SIGNAL PROCESSING vol. 2 , 3 April 1990 , NEW YORK (US) pages 1097 - 1100 TEN KATE ET AL. 'DIGITAL AUDIO CARRYING EXTRA INFORMATION'**
- **EBU REVIEW- TECHNICAL no. 230 , August 1988 , BRUSSELS BE pages 158 - 181 G. THEILE ET AL. 'LOW BIT-RATE CODING OF HIGH-QUALITY AUDIO SIGNALS'**
- **IEEE INTERNATIONAL CONFERENCE ON SYSTEMS ENGINEERING 17 September 1992 , NEW YORK (US) pages 467 - 472 KUUSAMA 'CAPACITY AND PROPERTIES OF SLAVE MODE HIDDEN CHANNEL CODING'**

## Description

The present invention relates to transmission and reception of an audio signal when the audio signal is coded in a transmitter to be an appropriate signal for the transmission path so that digital information is hidden into the signal by making use of the masking effect of the human ear.

Multichannel sound has today become more general as the film sound because of the higher listening enjoyment offered thereby than the 2-channel stereo sound. Therefore, it is necessary that also on the HDTV that the 4-channel film sound could be repeated as genuinely as possible. The currently used television systems, including HDTV, have, as regards the audio transfer, been however specified on a 2-channel stereo sound in which the bandwidth is not as such sufficient for transmission of a multichannel sound signal. Therefore, a 4-channel sound signal should in one way or another be so coded that it is appropriate for transmission via the transfer path of a 2-channel stereo signal. In addition, the encoding should be carried out so that the received signal can be listened to as such with receivers currently used in the form of 2-channel stereo. One of such coding methods is presented in a conference proceeding Proc. ICASSP 90, Alberquerque, New Mexico, April 3-6, 1990, p. 1097-110, W. ten Kate, L. van der Kerkhof and F. Zijderveld: Digital Audio carrying extra information. Said encoding method developed by Philips is described below in greater detail.

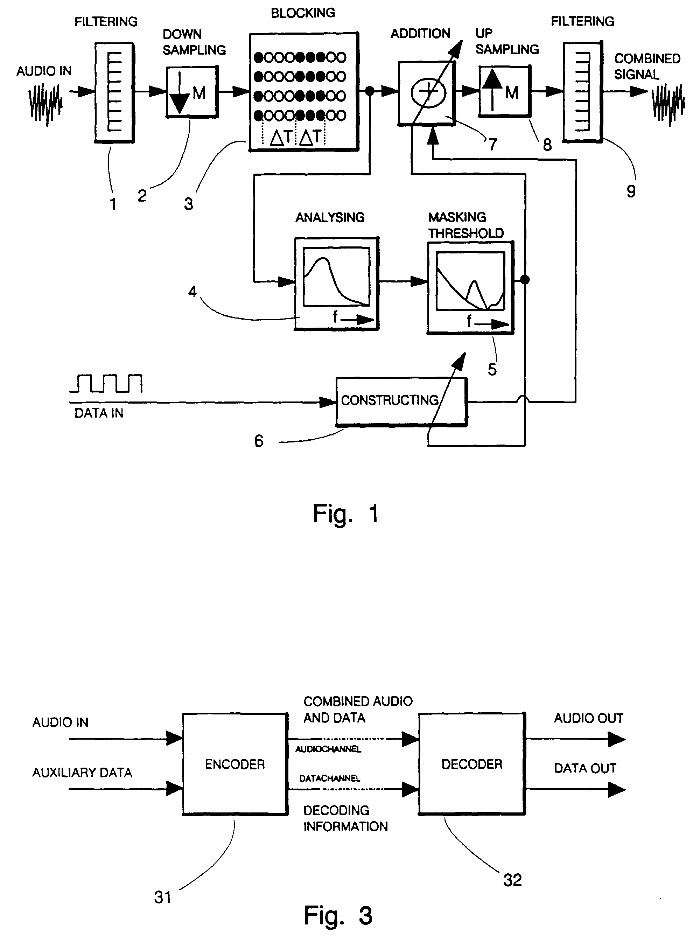

Said encoding method makes use of two characteristic properties of human hearing: hearing threshold and masking effect. The masking effect means that to any audio signal can be added another, weaker signal which is not audible to the human ear because of the masking effect. The masking effect is a psycho-acoustic effect in which the hearing threshold shifts upwards when other, lower sounds are present. The masking effect is best in sounds in which the spectrum components are close to the components of the masking sound. The frequency mask becomes more rapidly weaker in changing towards lower sounds. This is true also regarding the time level: the masking effect is greatest in sounds which are heard simultaneously. The dependence of the masking effect on time and frequency is well known in simple signals. The existence of the masking effect can be made use of so that signals below the hearing threshold can be added to the audio signal. This happens in principle so that an audio signal is sampled and in the locations of the sample bits not audible to the human ear other information is placed. The information is thus positioned in place of the less significant bits of the sample which is in digital form. When a signal like this is repeated, the human ear is not at all able to hear the added signal because the signal actually intended to be heard masks it. The masking capacity of the human ear therefore determines how many of the less significant bits can be substituted without still being audible. The added signal can be utilized for various purposes. Similarly, when a sound signal is compressed, the signals below the hearing threshold can be entirely omitted or saved, or only those audio signals can be transferred which are audible to the human ear. The principle of said encoding method known in the art making use of the masking effect is presented in Fig. 1. An entering audio signal is sampled and divided first into a plurality of subbands in a filter bank 1, and the signal samples of the subbands are decimated in a member 2. The subbands are preferably of equal size so that the sampling frequency according to the Nyqvist's criterion in the decimation member 2 of each subband is the same. The samples of each subband are then grouped into consecutive time windows in member 3. The length of a time window is $\Delta T$ and it includes samples at a given point of time from each subband. Thus, the simultaneous time windows of each subband every time constitute one block. A power spectrum is calculated for each block in a spectrum analysis member 4, and from the spectrum thus obtained a masking threshold is determined in member 5. After determining the masking threshold one is able to know what the maximum signal power is which can be added to the audio signal of a subband in said time window. Below the masking threshold calculated for the audio signal, DATA IN bits of the data signal are added. This is carried out so that a given number of consecutive bits of a data flow, e.g. three consecutive bits, form one word. Each word is interpreted to be an address representing a given sample value, in a three bit case there are therefore eight pieces of sample values. Thus, a sample value represents in digital form a given voltage value (the power value of the audio signal). The selection of the word and of the sample value equivalent thereto is carried out in member 6. The sample values are grouped to be on the suitable sample windows of the subbands conforming to the equivalence of the sample value and the masking threshold of the sample window of the subband in question, and summed into the audio signal samples of the subband in an adder 7. After being summed, the sample frequency of the signals of the subbands is increased in member 8, and the signals are again combined in a filter bank 9 into a wideband audio signal, sounding in the ears of a listener just like the original audio signal although data information has been added thereto.

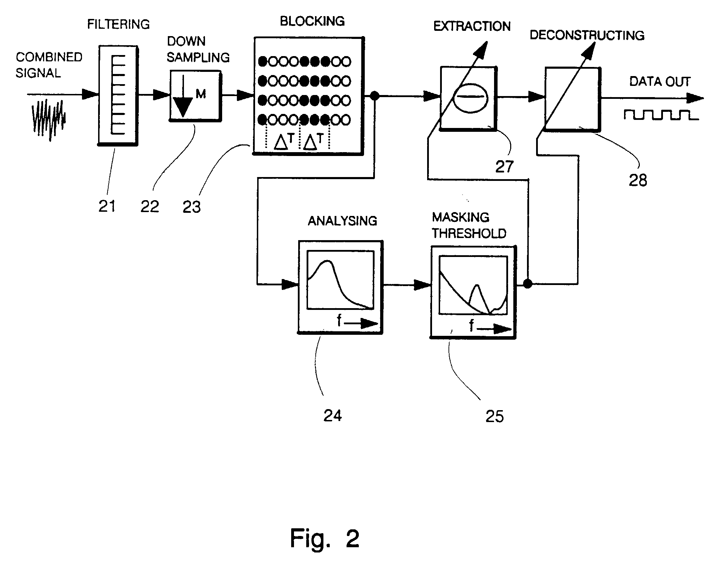

Reception is in principle a reverse operation to transmission. An audio signal in sample sequence form, received as in Fig. 2, is divided with filters 21 into subbands, decimated in member 23 and grouped in member 23 into time windows T so that the same blocks are produced as in the transmission. The contents of a time window of a subband are analyzed in a spectrum analysis member 24, and thereafter the masking threshold can be determined thereon in member 25. After calculating said masking threshold, the data information positioned below the masking threshold can be separated from the subband. Finally, the same address table is used in the block 28 as in the block 6 of the transmission, so that a conversion into bits can be made and by positioning the bits in succession the original bit flow is obtained.

The encoding methods described here can be used for transmission of the surround sound on a transfer path intended for transferring a 2-channel stereo signal of the HDTV e.g. as follows: the original audio channels are indicated with letters L, R, C and S. The first two refer to a signal carried to the left and right loudspeaker, C refers to signals carried to the loudspeaker in the centre, and S to the numerous signals (surround) to be carried to the loudspeakers on the sides of the listener. First, signals are mixed (matrixed) for instance for a new stereo pair as follows:

$$L' = L + \tfrac{1}{2} (C + S)$$

$$R' = R + \tfrac{1}{2} (C + S)$$

The surround information can be stored e.g. in signals
$H_1 = C$, and
$H_2 = S$.

When next, reference being made to Fig. 1 and the description related thereto, a signal L' is carried to the audio input, a surround information signal $H_1$ can be summed thereto as taught by the present method. The same applies to signals R' and $H_2$. Hereby, a 4-channel stereo signal can be coded on a normal stereo channel.

In the receiver, the surround information hidden in the 2-channel stereo can be extracted and the 4-channel stereo signal L", R", C" and S" is obtained by removing the mixing (dematrixing):

$$L" = L' - \tfrac{1}{2} (H_1 + H_2)$$

$$R" = R' - \tfrac{1}{2} (H_1 + H_2)$$

$C" = H_1$
$S" = H_2$.

Unless the portion of the C and S signals hidden in the right and left channels is removed, the signal is not quite the same as in the original one, but, owing to the masking effect, the listener is not able to tell the difference. Since the format of the signal on the transfer path may, at least in theory, be made identical with the format (e.g. NICAM) of the audio signal of the HDTV transfer path, the above signal is compatible and the existing receivers can be used for repeating the 2-channel stereo effect, or with the aid of additional circuits, for repeating the surround sound signal.

The method known in the art and described above involves certain drawbacks. First, both in the encoder of the transmitter and in the decoder of the receiver the hearing threshold utilizing the masking effect of the human hearing system must be calculated using a model (PSM, Psycho Acoustic Model) modelling the masking of the human hearing system. The encoder and the decoder act therefore independently. Therefore, the decoders are elaborate and the receivers are expensive. Since in both the encoder and the decoder PSM is used in quantization, the quantization resolutions are different, which leads to a distortion in the repeated audio signal, which is audible to the human ear and resembles the sound of water drops. This can be reduced by means of a better PSM but it raises the price of the receiver. In addition, because the information which can be added to a masking signal, varies continuously, it may in some instances be impossible to encode information to the extent required because when too much information is added, it results in distortion of the sound. The amount of the information to be encoded can be somewhat raised using a complicated PSM, but that means rise in price. Thus, the method known in the art in a way restricts the use of the more sophisticated PSMs. Bit errors occur in the reception, caused not only by the transmission channel, but also by the decoding method used.

The object of the present invention is to improve the method known in the art and described above so that the above drawbacks above are eliminated. The aim is according to claims 1 and 6 achieved so that an audio signal transmitted on a stereo channel and the information data hidden therein are separated using control information transmitted by an encoder, being received on a separate channel.

In the invention the information provided by an encoder of the system known in the art is made use of. This kind of information includes data on the data mode, information related to quantization, and information related to dematrixing. Said information is transmitted with a separate side channel simultaneously together with the audio signals to a receiver which, controlled by the side-channel information, is able to process the 2-channel stereo signal it received and to convert it, e.g. into a multichannel sound signal. The decoder of the receiver operates therefore controlled by the encoder of the transmitter, i.e. as a slave decoder.

The invention is demonstrated with the aid of the accompanying schematic figures, in which

Fig. 1    presents an encoder used in the method known in the art,

Fig. 2    presents the decoder known in the art, and

Fig. 3    shows in principle the method of the invention.

Figs 1 and 2 are the same as in the method of state of art and they have already been described above. Fig. 3 presents a decoding block indicated by reference numeral 31, which in its essential components can be similar to the encoding block of prior art shown in Fig. 1. The encoder combines the enterin multichannel audio signal into a combined stereo signal and "hides" a data signal therein with the aid of the masking effect. Information on the data mode, quantization, and matrixing information are obtainable from the encoder. The data mode illustrates the special arrangements to be carried out for maximizing the transfer capacity of the hidden data. These include e.g. information that no signal is included in certain channels relative to the level of the other channels, whereby said channels can after being decoded be attenuated. On the whole, the mode contains the processing of the special cases required in encoding the signal as far as they are not included in the sphere of the normal mixing. The quantization data gives information on the quantization steps of the masking signal and the signal to be masked (to be hidden) and on the number of bits, as well as on the masking threshold calculated for the time intervals of each subband, as is described above. The matrixing data provides information on how the original multichannel audio signal has been downmixed. In brief, all the information is derivable from the encoder with which the decoding can be carried out. The combined stereo signal obtained from the encoder, in which data has been "hidden", is adapted into an audio channel to be used, e.g. in NICAM format, for transmission on a radio path. Simultaneously the above listed data required in decoding are transmitted on a separate low-speed digital channel. If the data to be hidden in an audio channel cannot at a certain moment of time be received in an audio channel, i.e. the "masking effect" of the audio signal is not sufficient, the transmission of said data can take place on said separate data channel, the information transmitted whereby could be called side-information because it is transmitted by the side of the actual audio channel.

In the receiver the decoder 32 receives the audio channel signal and the side information of the data channel in which, controlled by the decoding information transmitted, it is enabled to decode the signal of the audio channel and to separate the data hidden therein. Controlled by the matrixing data it is further enabled to generate e.g. a multichannel sound signal.

The invention involves a number of advantages in comparison with the method of prior art. The psychoacoustic modelling (PSM) is not needed in the decoder of the receiver, the decoding and dematrixing become much simpler. Since the encoder is independent of the decoder, the sophisticated PSM method can be used therein. In addition, a separate data channel enables data transmission also when the masking capacity of the audio signal is not sufficient. Implementing a decoder with silica is also considerably simplified. Since the decoder receives the quantization data from the encoder, no narrow band distortion will be produced caused by faulty quantization resolutions, which is a great advantage as in the method known in the art distortion caused by faulty resolutions is a drawback which is distinctly audible. The data channel to be used for the transmission of side information can be slow, it is estimated that 16 kb/s is enough, and in addition, data to be transmitted thereon can be compressed and protected. Finally, one may state that since the receiver operates controlled by the transmitter, the encoder of the transmitter may easily be modified without having to make any changes in the receiver and it is possible to select freely which data to transmit on an audio channel and which on a data channel. All this is mentioned because the transmitter (i.e. the operator of the system) controls the decoder. The system of the invention is particularly well suited for transmission of the surround sound in a television system in which digital sound transfer is used. An advantageous application is the HDTV system.

## Claims

1. A method for combining an audio signal and a data signal in an encoder and for transmission of the same on an audio channel, in which encoder

   - an audio signal incoming in sample sequence form is divided into subbands,
   - a masking threshold is simultaneously calculated in each subband for a sample cluster of equal size, the sounds below which are not audible to the human ear,
   - the bits of the samples remaining below the masking threshold are replaced by the bits of the data signal, and
   - the subbands are combined, whereby a combined signal for transmission on the audio channel is obtained,

   characterized in that all the information required for separating the combined signal again is gathered in the encoder, and said information in the form of side information is simultaneously transmitted on a separate data channel together with the combined signal.

2. Method according to claim 1, characterized in that merely quantization data of the audio signal is transmitted as the side information.

3. Method according to claim 2, characterized in that said side information contains the data concerning the data mode illustrating arrangements for maximizing the amount of the hidden data, and reconstruction data of the data signal.

4. Method according to claim 2, characterized in that the side information also contains part of the information of the data signal.

5. Method according to claim 2, characterized in that the side information also contains dematrixing data when the audio signal is a signal generated from a surround sound signal by matrixing.

6. Method for separating a combined audio and data signal, obtained by the method according to claim 1, in a decoder,
in which

- the combined signal entering in sample sequence form is divided into subbands,
- the bits remaining below the masking threshold are separated from the audio signal, and
- said separated bits are combined, whereby a data signal transmitted on the audio channel is obtained,

characterized in that such information which is required for separating the data signal from the audio signal is received on a separate data channel in the form of side information, whereby the decoder carries out said separation operation controlled by the encoder.

7. Method according to claim 6,
characterized in that merely quantization data of the audio signal is received as side information.

8. Method according to claim 7,
characterized in that information on the data mode and on reconstruction of the data signal is included in the side information received.

9. Method according to claim 7,
characterized in that the received side information also contains part of the information concerning the data signal.

10. Method according to claim 7,
characterized in that when the audio signal is a signal generated by matrixing from a multichannel sound signal, also the dematrixing information is included in the side information.

11. Method according to any one of the preceding claims,
characterized in that it is used for transmission of a surround sound signal in a television system in which digital sound transfer is used.

**Patentansprüche**

1. Verfahren zum Kombinieren eines Audiosignals und eines Datensignals in einem Codierer und zur Übertragung desselben in einem Audiokanal, wobei im Codierer

- ein Audiosignal, das in Form einer Abtastfolge hereinkommt, in Unterbänder unterteilt wird,
- ein Maskierschwellenwert gleichzeitig in jedem Unterband für eine Abtastgruppe gleicher Größe berechnet wird, wobei Schalle unter dem Schwellenwert für das menschliche Ohr nicht hörbar sind,
- die Bits der Abtastungen, die unter dem Maskierschwellenwert bleiben, durch die Bits des Datensignals ersetzt werden und
- die Unterbänder kombiniert werden, wodurch ein kombiniertes Signal zur Übertragung im Audiokanal erhalten wird,

dadurch gekennzeichnet,
daß die gesamte Information, die zum Wiedertrennen des kombinierten Signals benötigt wird, im Codierer gesammelt wird, wobei die Information in Form von Seiteninformation gleichzeitig auf einem separaten Datenkanal zusammen mit dem kombinierten Signal übertragen wird.

2. Verfahren nach Anspruch 1,
dadurch gekennzeichnet,
daß lediglich Quantisierungsdaten des Audiosignals als Seiteninformation übertragen wird.

3. Verfahren nach Anspruch 2,
dadurch gekennzeichnet,
daß die Seiteninformation die Daten betreffend den Datenmodus zur Erläuterung der Vorkehrungen zum Maximieren der Menge versteckter Daten sowie rekonstruierte Daten des Datensignals aufweist.

4. Verfahren nach Anspruch 2,
dadurch gekennzeichnet,
daß die Seiteninformation auch einen Teil der Information des Datensignals enthält.

5. Verfahren nach Anspruch 2,
dadurch gekennzeichnet,
daß die Seiteninformation auch Dematrixierungsdaten enthält, wenn das Audiosignal ein Signal ist, das durch Matrixbildung aus einem Surround-Sound-Signal erzeugt wurde.

6. Verfahren zum Trennen eines kombinierten Audio- und Datensignals, das nach dem Verfahren nach Anspruch 1 gewonnen wurde, in einem Decodierer, wobei

- das in Abtastfolgeform einlaufende kombinierte Signal in Unterbänder unterteilt wird,
- die unter dem Maskierungsschwellenwert bleibenden Bits aus dem Audiosignal herausgetrennt werden, und
- die herausgetrennten Bits kombiniert werden, wodurch man ein Datensignal erhält, das in einem Audiokanal übertragen wird,

dadurch gekennzeichnet,
daß die Information, die zum Trennen des Datensignals vom Audiosignal benötigt wird, in einem getrennten Datenkanal in Form von Seiteninformation empfangen wird, wodurch der Decoder den Trennvorgang gesteuert durch den Codierer ausführt.

7. Verfahren nach Anspruch 6,
dadurch gekennzeichnet,
daß lediglich Quantisierungsdaten des Audiosignals als Seiteninformation empfangen werden.

8. Verfahren nach Anspruch 7,
dadurch gekennzeichnet,
daß in der empfangenen Seiteninformation Informationen bezüglich des Datenmodus sowie der Rekonstruktion des Datensignals enthalten sind.

9. Verfahren nach Anspruch 7,
dadurch gekennzeichnet,
daß die empfangene Seiteninformation auch einen Teil der Information betreffend das Datensignal enthält.

10. Verfahren nach Anspruch 7,
dadurch gekennzeichnet,
daß dann, wenn das Audiosignal ein Signal ist, das durch Matrixbildung aus einem mehrkanaligen Schallsignal gewonnen wurde, auch die Dematrixierungs-Information in der Seiteninformation enthalten ist.

11. Verfahren nach einem der vorhergehenden Ansprüche,
dadurch gekennzeichnet,
daß es zur Übertragung eines Surround-Sound-Signals in einem Fernsehsystem, in dem digitale Schallübertragung verwendet wird, verwendet wird.

**Revendications**

1. Procédé pour combiner un signal audio et un signal de données dans un encodeur et pour la transmission de celui-ci sur un canal audio, dans cet encodeur :

    - un signal audio qui arrive sous forme de séquence échantillon est divisé en sous-bandes,
    - un seuil de masquage est calculé simultanément dans chaque sous-bande pour un groupe échantillon de taille égale, les sons en dessous n'étant pas audibles pour l'oreille humaine,
    - les morceaux d'échantillons restant en dessous du seuil de masquage sont remplacés par des morceaux du signal de données, et

    - les sous-bandes sont combinées, grâce auxquelles on obtient un signal combiné pour la transmission sur le canal audio,

    caractérisé en ce que toute l'information nécessaire pour séparer à nouveau le signal combiné, est rassemblée dans l'encodeur et ladite information sous la forme d'informations latérales est transmise simultanément sur un canal de données séparé, en même temps que le signal combiné.

2. Procédé selon la revendication 1, caractérisé en ce que les données de quantification du signal audio sont seulement transmises comme information latérale.

3. Procédé selon la revendication 2, caractérisé en ce que ladite information latérale contient les données concernant le mode de données illustrant les arrangements pour rendre maximale la quantité des données cachées et les données de reconstruction du signal de données.

4. Procédé selon la revendication 2, caractérisé en ce que l'information latérale contient aussi une partie de l'information du signal de données.

5. Procédé selon la revendication 2, caractérisé en ce que l'information latérale contient aussi des données de dématriçage lorsque le signal audio est un signal généré à partir d'un signal de son en relief par le matriçage.

6. Procédé pour séparer un signal audio combiné et un signal de données obtenu par le procédé selon la revendication 1 dans un décodeur dans lequel

    - le signal combiné entrant sous forme de séquence échantillon est divisé en sous-bandes,
    - les morceaux restant en dessous du seuil de masquage sont séparés du signal audio, et
    - lesdits morceaux séparés sont combinés, grâce auxquels on obtient un signal de données transmis sur un canal audio,

    caractérisé en ce que cette information qui est nécessaire pour séparer le signal de données du signal audio, est reçue sur un canal de données séparé sous la forme d'informations latérales, par laquelle le décodeur effectue cette opération de séparation contrôlée par l'encodeur.

7. Procédé selon la revendication 6, caractérisé en ce que seule la donnée de quantification du signal audio est reçue en tant qu'information latérale.

8. Procédé selon la revendication 7, caractérisé en ce que l'information sur le mode de données et sur la reconstruction du signal de données est incluse dans l'information latérale reçue.

9. Procédé selon la revendication 7, caractérisé en ce que l'information latérale reçue contient aussi une partie de l'information qui concerne le signal de données.

10. Procédé selon la revendication 7 caractérisé en ce que lorsque le signal audio est un signal généré par matriçage à partir d'un signal son multicanal, l'information de dématriçage est aussi incluse dans l'information latérale.

11. Procédé selon l'une quelconque des revendications précédentes, caractérisé en ce qu'on l'utilise pour la transmission d'un signal son en relief dans un système de télévision dans lequel on utilise un transfert de son digital.

FILTERING

DOWN
SAMPLING

BLOCKING

ADDITION

UP
SAMPLING

FILTERING

AUDIO IN

M

$\Delta$T $\Delta$T

M

COMBINED
SIGNAL

1

2

3

7

8

9

ANALYSING

MASKING
THRESHOLD

4

f

f

5

DATA IN

CONSTRUCTING

6

**Fig. 1**

AUDIO IN

AUXILIARY DATA

ENCODER

COMBINED AUDIO
AND DATA

AUDIOCHANNEL

DATACHANNEL

DECODING
INFORMATION

DECODER

AUDIO OUT

DATA OUT

31

32

**Fig. 3**

EP 0 540 330 B1

Fig. 2